(19) Europäisches Patentamt
European Patent Office
Office européen des brevets

(11) **EP 3 211 579 A1**

(12) **EUROPEAN PATENT APPLICATION**
published in accordance with Art. 153(4) EPC

(43) Date of publication:
**30.08.2017 Bulletin 2017/35**

(51) Int Cl.:
***G06Q 30/02*** *(2012.01)*

(21) Application number: **15852193.0**

(22) Date of filing: **26.08.2015**

(86) International application number:
**PCT/JP2015/004284**

(87) International publication number:
**WO 2016/063446 (28.04.2016 Gazette 2016/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.10.2014 JP 2014216839**

(71) Applicant: **NEC Corporation**
**Tokyo 108-8001 (JP)**

(72) Inventors:
• **MOTOHASHI, Yousuke**
**Tokyo 108-8001 (JP)**
• **YAGI, Sayaka**
**Tokyo 108-8001 (JP)**

(74) Representative: **Vossius & Partner**
**Patentanwälte Rechtsanwälte mbB**
**Siebertstrasse 3**
**81675 München (DE)**

(54) **PRIORITY ORDER DETERMINATION SYSTEM, METHOD AND PROGRAM FOR EXPLANATORY VARIABLE DISPLAY**

(57)    Provided is an explanatory variable display priority order determination system that can determine a display priority order for explanatory variables provided for estimated value calculation and can display the explanatory variables. A display priority order determination means 73 determines the display priority order of the explanatory variables to be used in estimation of a value by an estimation formula on the basis of a residual as an estimation amount of an error between an estimated value by the estimation formula and a measured value. At this time, the display priority order determination means 73 determines the display priority order of the explanatory variables on the basis of magnitude of an influence of the explanatory variables on the residual. A display means 74 displays the explanatory variables according to the display priority order.

## FIG. 13

**Description**

Technical Field

The present invention relates to an explanatory variable display priority order determination system, an explanatory variable display priority order determination method, and an explanatory variable display priority order determination program for determining a priority order in displaying explanatory variables.

Background Art

Estimation of future from available data is effective in improvement of business operations in various business fields. For example, if future sales can be estimated from sales data in the last two weeks in a store, the store can appropriately control the stock.

NPL 1 discloses software that assists an analyst such as a statistician in an analysis of available data. The software disclosed in NPL 1 has an estimation function and a function to visualize an estimation result.

NPL 2 describes automatic selection a prediction formula from among a plurality of prediction formulas, and display of a graph of a transition of the selected prediction formula together with graphs of a prediction value and an actual value in calculating the prediction value, using the prediction formula.

Here, in the present specification, data serving as a clue to estimation, such as the sales data in the last two weeks, will be called "explanatory variable" and a variable to be estimated, such as the future sales, will be called "object variable".

Further, a formula expressing regularity found between the object variable and the explanatory variable will be called "estimation formula". Further, a value estimated using the estimation formula will be called "estimated value".

The estimation formula is expressed by the following format, for example.

$$y = a_1 x_1 + a_2 x_2 + ... + a_n x_n + b$$

In the above formula, y is the estimated value. $x_1$, $x_2$, ..., $x_n$ are explanatory variables. b is a constant term. $a_1$, $a_2$, ..., $a_n$, and b are determined using learning data in advance. When values of the explanatory variables are provided, the estimated value y can be calculated from the above formula.

Citation List

Non Patent Literature

NPL 1: "SAS Visual Analytics", SAS Institute Japan Ltd., [searched on October 23, 2014], the Internet <URL:http://www.sas.com/ja_jp/software/business-intelligence/visual-analytics.html>

NPL 2: "Machine leaning one step ahead, penetrating into the field of use of data drastically increased due to IoT", Nikkei Business Publications, Inc., "Nikkei big data", 2014, vol. 06, p.7-12

Summary of Invention

Technical Problem

It is favorable for the analyst to grasp provided explanatory variables (for example, change of values of the explanatory variables) together with display of change of the estimated value. However, typically, there are many types of the explanatory variables, and in a case of displaying all the explanatory variables in a random order, it becomes difficult for the analyst to grasp relevancy between the explanatory variable and the estimated value.

Therefore, an object of the present invention is to provide an explanatory variable display priority order determination system, an explanatory variable display priority order determination method, and an explanatory variable display priority order determination program for determining a display propriety order for explanatory variables provided for estimated value calculation, and displaying the explanatory variables.

Solution to Problem

An explanatory variable display priority order determination system of the present invention includes: a display priority order determination means configured to determine a display priority order of explanatory variables to be used in estimation of a value by an estimation formula on the basis of a residual that is an estimation amount of an error between an estimated value by the estimation formula and a measured value; and a display means configured to display the explanatory variables according to the display priority order, wherein the display priority order determination means determines the display priority order of the explanatory variables on the basis of magnitude of an influence of the explanatory variables on the residual.

Furthermore, an explanatory variable display priority order determination system of the present invention includes: a display priority order determination means configured to determine a display priority order of explanatory variables to be used in estimation of a value by an estimation formula on the basis of coefficients of the explanatory variables in the estimation formula; and a display means configured to display change of an estimated value by the estimation formula and change of a value of the explanatory variable along a predetermined axis.

Furthermore, an explanatory variable display priority order determination method of the present invention includes: determining a display priority order of explanatory variables to be used in estimation of a value by an estimation formula on the basis of a residual that is an estimation amount of an error between an estimated value by the estimation formula and a measured value; displaying the explanatory variables according to the display priority order; and determining the display priority order of the explanatory variables on the basis of magnitude of an influence of the explanatory variables on the residual, in determining the display priority order.

Furthermore, an explanatory variable display priority order determination method of the present invention includes: determining a display priority order of explanatory variables to be used in estimation of a value by an estimation formula on the basis of coefficients of the explanatory variables in the estimation formula; and displaying change of an estimated value by the estimation formula and change of a value of the explanatory variable along a predetermined axis.

Furthermore, an explanatory variable display priority order determination program of the present invention causes a computer to execute: display priority order determination processing of determining a display priority order of explanatory variables to be used in estimation of a value by an estimation formula on the basis of a residual that is an estimation amount of an error between an estimated value by the estimation formula and a measured value; and display processing of displaying the explanatory variables according to the display priority order, wherein the display priority order of the explanatory variables is determined on the basis of magnitude of an influence of the explanatory variables on the residual in the display priority order determination processing.

Furthermore, an explanatory variable display priority order determination program of the present invention causes a computer to execute: display priority order determination processing of determining a display priority order of explanatory variables to be used in estimation of a value by an estimation formula on the basis of coefficients of the explanatory variables in the estimation formula; and display processing of displaying change of an estimated value by the estimation formula and change of a value of the explanatory variable along a predetermined axis.

Advantageous Effects of Invention

According to the present invention, the display priority order can be determined for the explanatory variables provided for estimated value calculation, and the explanatory variables can be displayed.

Brief Description of Drawings

[Fig. 1] It depicts a block diagram illustrating a configuration example of an explanatory variable display priority order determination system of a first exemplary embodiment of the present invention.
[Fig. 2] It depicts a diagram illustrating examples of explanatory variables to be input to the explanatory variable display priority order determination system.
[Fig. 3] It depicts a diagram illustrating examples of a calculated estimated value y.
[Fig. 4] It depicts a schematic diagram illustrating a display example by display means.
[Fig. 5] It depicts a flowchart illustrating an example of progress of processing of the first exemplary embodiment.
[Fig. 6] It depicts a schematic diagram illustrating an example of an estimation formula used by the estimation means.
[Fig. 7] It depicts a schematic diagram illustrating an example of a model for selecting an estimation formula.
[Fig. 8] It depicts a schematic diagram illustrating an example of a plurality of estimation formulas used by the estimation means.
[Fig. 9] It depicts a block diagram illustrating a configuration example of an explanatory variable display priority order determination system according to a second exemplary embodiment of the present invention.
[Fig. 10] It depicts a flowchart illustrating an example of progress of processing of the second exemplary embodiment.
[Fig. 11] It depicts a schematic diagram illustrating an example of a residual derivation formula.

[Fig. 12] It depicts a schematic block diagram illustrating a configuration example of a computer according to the exemplary embodiments of the present invention.

[Fig. 13] It depicts a block diagram illustrating an example of a minimum configuration of the present invention.

Description of Embodiments

Hereinafter, exemplary embodiments of the present invention will be described with reference to the drawings.

As described above, an estimation formula is expressed by the formula (1) below, for example.

$$y = a_1 x_1 + a_2 x_2 + ... + a_n x_n + b \qquad ... \qquad \text{Formula (1)}$$

y is an estimated value. An example of an object to be estimated by the formula (1) includes traffic. However, the object to be estimated is not especially limited.

Explanatory variables are expressed by $x_1$, $x_2$, ..., $x_n$ in the formula (1). The number of explanatory variables expressed in the formula (1) is not specially limited.

In a case where the explanatory variables are provided for estimated value calculation, the estimated value y can be obtained using the formula (1).

Here, types of the explanatory variables provided for estimated value calculation include a continuous-type variable and a category-type variable.

The continuous-type variable takes a numerical value as a value. An example of the continuous-type variable includes temperature.

The category-type variable takes an item as a value. An example of the category-type variable includes "sex". Taking the "sex" as an example, values taken by the "sex" as the category-type variable are, for example, "male" and "female". Another example of the category-type variable includes day of week. Taking the "day of week" as an example, values taken by the "day of week" as the category-type variable are, for example, "Sunday", "Monday", ..., and "Saturday".

One continuous-type variable corresponds to one of the explanatory variables $x_1$, $x_2$, ..., $x_n$ in the estimation formula (in other words, the explanatory variables included in the estimation formula). Then, in a case where the value (numerical value) of the explanatory variable falling under the continuous-type variable is provided, the value is assigned to the corresponding explanatory variable in the estimation formula.

Further, values of one category-type variable correspond to respective ones of the explanatory variables $x_1$, $x_2$, ..., $x_n$ in the estimation formula. For example, the values (the items such as the "Sunday" and the "Monday") taken by the "day of week" as the category-type variable correspond to respective ones of the explanatory variables $x_1$, $x_2$, ..., $x_n$ in the estimation formula. In a case where the value (item) of the explanatory variable falling under the category-type variable is provided, any value of two values (for example, 0 and 1) is assigned to the explanatory variables in the estimation formula, the explanatory variables corresponding to the values of the category-type variable. To be more specific, in a case where the value (item) of the explanatory variable falling under the category-type variable is provided, 1 is assigned to the explanatory variable in the estimation formula, the explanatory variable corresponding to the value, and 0 is assigned to the explanatory variables in the estimation formula, the explanatory variables corresponding to other values of the category-type variable. For example, in a case where the "Monday" is provided as the value of the "day of week" as the category-type variable, 1 is assigned to the explanatory variable in the estimation formula, the explanatory variable corresponding to Monday, and 0 is assigned to the explanatory variables in the estimation formula, the explanatory variables corresponding to the days of week other than Monday. Description will be given, assuming that 0 or 1 is assigned as the two values.

In this way, the value of the continuous-type variable is input to the explanatory variable in the estimation formula, the explanatory variable corresponding to the continuous-type variable, and any value of the two values is assigned to the explanatory variables in the estimation formula, the explanatory variables corresponding to the values of the category-type variable, whereby the estimated value y can be obtained.

Note that, as described above, the values of one category-type variable correspond to respective ones of the explanatory variables $x_1$, $x_2$, ..., $x_n$ in the estimation formula. Therefore, it can be said that one category-type variable corresponds to a plurality of explanatory variables in the estimation formula.

The present invention determines a display priority order of the explanatory variables (various continuous-type variables or various category-type variables) provided to calculate the estimated value y.

First Exemplary Embodiment

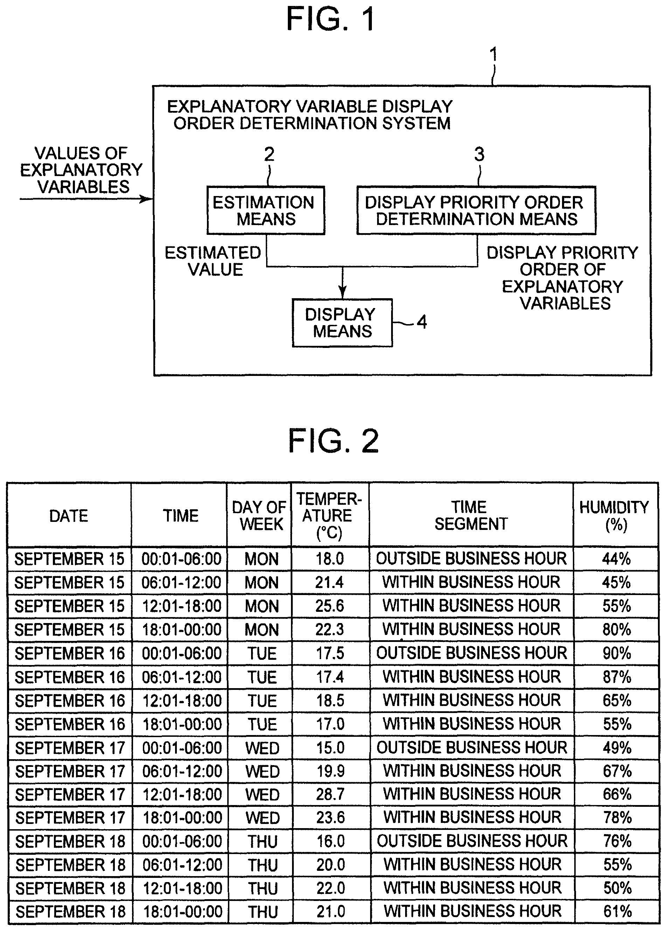

Fig. 1 is a block diagram illustrating a configuration example of an explanatory variable display priority order determination system of a first exemplary embodiment of the present invention. An explanatory variable display priority order determination system 1 of the first exemplary embodiment includes an estimation means 2, a display priority order determination means 3, and a display means 4.

Values of various explanatory variables falling under the continuous-type variable and the category-type variable are input to the explanatory variable display priority order determination system 1 through an input device (illustration is omitted in Fig. 1).

The estimation means 2 calculates an estimated value, using an estimation formula expressed in the format of the formula (1) determined in advance when the values of the explanatory variables are input. The estimation formula used by the estimation means 2 is determined in advance using learning data.

The estimation means 2 assigns the input value of the explanatory variable falling under the continuous-type variable to the explanatory variable in the estimation formula, the explanatory variable corresponding to the continuous-type variable. Further, the estimation means 2 assigns 1 to the explanatory variable in the estimation formula, the explanatory variable corresponding to the input value of the explanatory variable falling under the category-type variable, and assigns 0 to the explanatory variables in the estimation formula, the explanatory variables corresponding to other values of the category-type variable. Then, the estimation means 2 calculates the estimation formula to calculate the estimated value y.

The values of the explanatory variables are input to the explanatory variable display priority order determination system 1, and the estimation means 2 calculates the estimated value y according to the values of the explanatory variables and the estimation formula. The values of the explanatory variables are associated with time information, for example. In this case, the estimation means 2 calculates the estimated values y at individual points of time according to the values of the explanatory variables at individual points of time and the estimation formula.

Fig. 2 is a diagram illustrating an example of the explanatory variables input to the explanatory variable display priority order determination system 1. In Fig. 2, "date" and "time" fall under the time information. Then, the explanatory variables "day of week", "temperature", "time segment", and "humidity" are associated with the time information. Note that the "day of week" and the "time segment" are the category-type variables. In this example, values taken by the "time segment" are "within business hours" and "outside business hours". The "temperature" and the "humidity" are the continuous-type variables. As exemplarily illustrated in Fig. 2, when the values of the explanatory variables associated with the time information are input, the estimation means 2 may just calculate the estimated value y for every row exemplarily illustrated in Fig. 2.

The estimation means 2 sends the calculated estimated value y to the display means 4. In a case where the values of the explanatory variables are associated with the time information, the estimation means 2 sends the calculated estimated value y and the time information corresponding to the estimated value y to the display means 4 in association with each other.

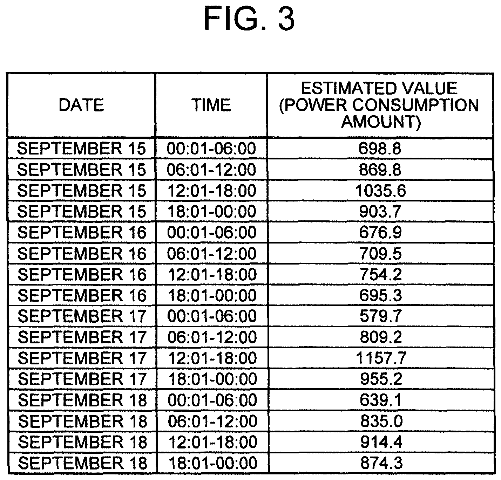

Fig. 3 is a diagram illustrating examples of the calculated estimated value y. Fig. 3 exemplarily illustrates power consumption as the estimated value y. Further, the estimated value (power consumption) is a value obtained according to the values of the explanatory variables illustrated in Fig. 2 and the estimation formula. "Date" and "time" illustrated in Fig. 2 are similar to the "date" and the "time" illustrated in Fig. 3, and the "date" and the "time" also fall under the time information in Fig. 3. The estimation means 2 may just end the estimated value y and the time information to the display means 4 in association with each other in every row exemplarily illustrated in Fig. 3.

Note that, here, for simplification of the description, an example in which the number of the estimation formula used by the estimation means 2 is one will be described.

The display priority order determination means 3 determines a display priority order of the exemplarily variables in displaying change of the values of the explanatory variables to be input to the explanatory variable display priority order determination system 1. The "change of the values of the explanatory variables" is change of values of explanatory variables along a time axis, for example. The display priority order determination means 3 determines the display priority order on the basis of coefficients (to be more specific, absolute values of the coefficients) of the explanatory variables $x_1$, $x_2$, ..., $x_n$ in the estimation formula used by the estimation means 2 to calculate the estimated value y. The display priority order determination means 3 makes the display priority order of the explanatory variable higher as the absolute value of the coefficient of the explanatory variable in the estimation formula, the explanatory variable corresponding to the explanatory variable of which the value is input, is larger, and makes the display priority order of the explanatory variable lower as the absolute value of the coefficient is smaller.

For ease of description, assume that all the explanatory variables of which the values are input are the continuous-type variables (for example, the temperature, the humidity, and the like), and the individual explanatory variables $x_1$, $x_2$, ..., $x_n$ in the estimation formula each correspond to the continuous-type variables. In this case, the display priority order determination means 3 may just compare the absolute values of the coefficients of the explanatory variables in the estimation formula, the explanatory variables corresponding to the continuous-type variables, and determine the display priority order of the continuous-type variables in descending order of the absolute values of the coefficients.

It can be said that, in the estimation formula, the explanatory variable having a larger absolute value of the coefficient has a larger influence on the estimated value y. For example, when $a_1$ = -10 and $a_2$ = 0.1 in the formula (1), the explanatory variable corresponding to $x_1$ has a larger influence on the estimated value y than the explanatory variable corresponding to $x_2$. Therefore, by determining the display priority order of the continuous-type variables in descending order of the absolute values of the coefficients, change of the value of the explanatory variable having a larger influence on the estimated value y can be preferentially displayed on a priority basis.

For ease of description, the above example has been made on the assumption that all the explanatory variables to be used in calculation of the estimated value y are the continuous-type variable. However, the explanatory variables to be used in calculation of the estimated value y are not limited only to the continuous-type variables and may include the category-type variable. In this case, values of the category-type variable are also input to the explanatory variable display priority order determination system 1. Further, the explanatory variables corresponding to the values (items) of the category-type variable are included in the estimation formula. In this way, in the case where the category-type variable is included in the explanatory variable to be used in calculation of the estimated value y, the display priority order determination means 3 determines the display priority order of the explanatory variables as follows.

The display priority order determination means 3 calculates, for each category-type variable, a sun of the absolute values of the coefficients of the explanatory variables in the estimation formula, the explanatory variables corresponding to values of the category-type variable. In this case, one value is calculated for each category-type variable. Then, the display priority order determination means 3 determines the display priority order of the explanatory variables as the category-type variables and the explanatory variables as the continuous-type variables on the basis of the sum of the absolute values of the coefficients calculated for each category-type variable, and the absolute values of the coefficients of the explanatory variables in the estimation formula, the explanatory variables corresponding to the continuous-type variables. To be specific, the display priority order determination means 3 determines the display priority order of the explanatory variables as the category-type variables and the explanatory variables as the continuous-type variables in descending order of the value (the sum of the absolute values of the coefficients) calculated for each category-type variable and the absolute values of the coefficients in the estimation formula, the coefficients corresponding to the continuous-type variables.

The display priority order determination means 3 sends the determined display priority order of the explanatory variables to the display means 4.

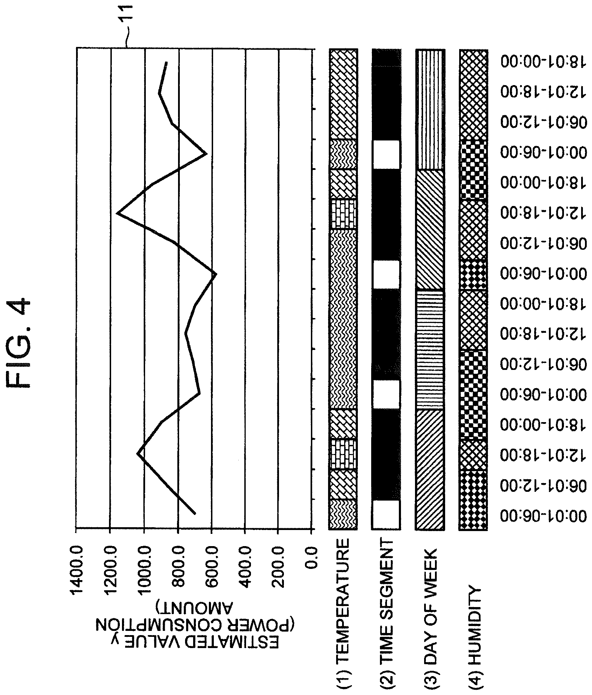

The display means 4 displays change of the estimated value calculated by the estimation means 2, and displays change of the values of the explanatory variables according to the display priority order determined by the display priority order determination means 3. Fig. 4 is a schematic diagram illustrating a display example by the display means 4. The display means 4 displays change of the estimated value y in an estimated value display area 11 set to an upper portion on a screen, for example (see Fig. 4). In the example illustrated in Fig. 4, the change of the estimated value y is displayed along a time axis (horizontal axis). Then, the display means 4 displays change of the values of the various explanatory variables below the estimated value display area 11 according to the display priority order (see Fig. 4). In the example illustrated in Fig. 4, the change of the values of the explanatory variables is displayed along a time axis. Here, the time axis in the estimated value display area 11 and the time axis in displaying change of the values of the explanatory variables are favorably matched with each other. In other words, the change of the estimated value y and the change of the values of the explanatory variables are favorably displayed along the common time axis. In this way, with the display, the analyst can intuitively grasp how the estimated value y and the values of the explanatory variables correlate to each other along the time axis. In the example illustrated in Fig. 4, the bracketed values represent the display priority order. Then, the display means 4 displays, in the display priority order from a side closer to the estimated value display area 11, change of the value of the explanatory variable "temperature", change of the value of the explanatory variable "time segment", change of the value of the explanatory variable "day of week", and change of the value of the explanatory variable "humidity".

The display means 4 may display the change of the values of all the explanatory variables in the display priority order. Alternatively, the display means 4 may display the change of the values of the explanatory variables up to a predetermined ordinary number from the top in the display priority order.

Further, Fig. 4 exemplarily illustrates the case in which the display means 4 displays the change of the values of the explanatory variables in a heat map format (a format to display colors and patterns according to values). However, the display form of the change of the values of the explanatory variables is not especially limited. For example, the display means 4 may display the change of the values of the explanatory variables by a polygonal line graph or the like. Further, the display means 4 may switch the display form of the change of the values of the individual explanatory variables according to an operation of the analyst.

Further, Fig. 4 displays the estimated value y and the values of the explanatory variables along the time axis (horizontal axis). However, the horizontal axis is not limited to the time axis. Information corresponding to the horizontal axis is not limited to time information and may be arbitrary information as long as the information corresponding to the horizontal axis and the values of the explanatory variables are associated with one another.

The estimation means 2, the display priority order determination means 3, and the display means 4 are realized by a CPU of a computer that includes an input device and a display device, for example. In this case, the CPU may just read an explanatory variable display priority order determination program from a program recording medium such as a program storage device (illustration is omitted in Fig. 1) of the computer, for example, and may just be operated as the estimation means 2, the display priority order determination means 3, and the display means 4 according to the explanatory variable display priority order determination program. Note that, as for the display means 4, a portion that causes the display device to execute display is realized by the CPU. Further, respective means may be realized by separate pieces of hardware.

The explanatory variable display priority order determination system 1 may be configured from two or more physically separated devices that are connected in a wired or wireless manner. This point is similar in the exemplary embodiment described below.

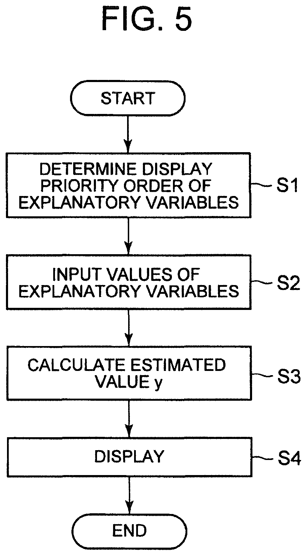

Next, the progress of processing will be described. Fig. 5 is a flowchart illustrating an example of progress of processing of the first exemplary embodiment.

The display priority order determination means 3 determines the display priority order of the explanatory variables of which the values are input on the basis of the coefficients of the explanatory variables in the estimation formula to be used by the estimation means 2 for estimated value calculation (step S1).

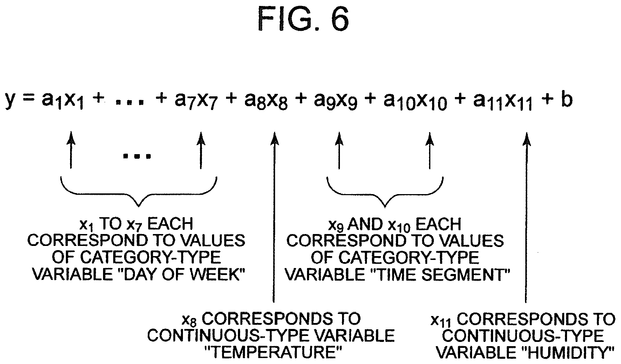

The processing of step S1 will be specifically described. Assume that the estimation formula used by the estimation means 2 is the estimation formula illustrated in Fig. 6. In the example illustrated in Fig. 6, explanatory variables $x_1$ to $x_7$ in the estimation formula respectively correspond to the values ("Sunday", "Monday", ..., "Saturday") of the explanatory variable "day of week" as the category-type variable. Further, an explanatory variable $x_8$ in the estimation formula corresponds to the explanatory variable "temperature" as the continuous-type variable. Further, explanatory variables $x_9$ and $x_{10}$ in the estimation formula respectively correspond to the values ("within business hours" and "outside business hours") of the explanatory variable "time segment" as the category-type variable. Further, an explanatory variable $x_{11}$ in the estimation formula corresponds to the explanatory variable "humidity" as the continuous-type variable. Note that the estimation formula illustrated in Fig. 6 is schematically illustrated for ease of description, and the number of $x_n$ in the estimation formula and which explanatory variable the $x_n$ in the estimation formula corresponds to are not limited to the example illustrated in Fig. 6.

In a case where the estimation formula illustrated in Fig. 6 is used, a set of the values of the "day of week", the value of "temperature", the value of the "time segment", and the value of the "humidity" at individual points of time is input to the explanatory variable display priority order determination system 1.

The display priority order determination means 3 calculates, for each category-type variable, the sun of the absolute values of the coefficients of the explanatory variables in the estimation formula, the explanatory variables corresponding to the values of the category-type variable. In the example illustrated in Fig. 6, the display priority order determination means 3 calculates, regarding the category-type variable "day of week", the sum of the absolute values of the coefficients of $x_1$ to $x_7$ corresponding to the values of the "day of week". That is, the display priority order determination means 3 calculates $|a_1| + |a_2| + |a_3| + |a_4| + |a_5| + |a_6| + |a_7|$. A calculation result is described as $a_{1\ to\ 7}$. Similarly, the display priority order determination means 3 calculates, regarding the category-type variable "time segment", the sum of the absolute values of the coefficients of $x_9$ and $x_{10}$ corresponding to the values of the "time segment". That is, the display priority order determination means 3 calculates $|a_9| + |a_{10}|$. A calculation result is described as $a_{9\ to\ 10}$.

Then, the display priority order determination means 3 determines the display priority order of the explanatory variables "day of week" and the time segments" as the category-type variables, and the explanatory variables "temperature" and "humidity" as the continuous-type variable on the basis of the values $a_{1\ to\ 7}$ and $a_{9\ to\ 10}$ calculated for each category-type variable and the absolute values of the coefficients of the explanatory variables in the estimation formula, the explanatory variables corresponding to the continuous-type variables "temperature" and "humidity". The absolute value of the coefficient of the explanatory variable $x_8$ in the estimation formula, the explanatory variable $x_8$ corresponding to the "temperature", is $|a_8|$. The absolute value of the coefficient of the explanatory variable $x_{11}$ in the estimation formula, the explanatory variable $x_{11}$ corresponding to the "humidity", is $|a_{11}|$. The display priority order determination means 3 determines the display priority order of the "day of week", the "time segment", the "temperature", and the "humidity" in descending order of $a_{1\ to\ 7}$, $a_{9\ to\ 10}$, $|a_8|$, and $|a_{11}|$. For example, if $|a_8| > a_{9\ to\ 10} > a_{1\ to\ 7} > |a_{11}|$ is satisfied, the display priority order determination means 3 determines the display priority order such that the "temperature", the "time segment", the "day of week", and the "humidity" are placed first, second, third, and fourth in order.

Further, when the values of the explanatory variables are input to the explanatory variable display priority order determination system 1 (step S2), the estimation means 2 calculates the estimated value y according to the values of the explanatory variables and the estimation formula (step S3). For example, assume that "Sunday", "25°C", "outside business hours", and "60%" are input as the values of the explanatory variables "day of week", "temperature", "time segment" and "humidity" at a certain point of time. The estimation means 2 assigns $x_1 = 1$, $x_8 = 25$, $x_{10} = 1$, $x_{11} = 60$, and assigns 0 to other explanatory variables in the estimation formula illustrated in Fig. 6, thereby to calculate the estimated value y at the certain point of time. The estimation means 2 similarly calculate the estimated values of other points of time. The estimation means 2 sends the calculated estimated value y and the time information corresponding to the estimated value y to the display means 4 in association with each other.

Next, as exemplarily illustrated in Fig. 4, the display means 4 displays the change of the estimated value y, and displays the change of the values of the explanatory variables according to the display priority order determined in step S1 (step S4). As exemplarily described above, in a case where the display priority orders of the "temperature", the "time segment", the "day of week", and the "humidity" are placed first, second, third, and fourth, respectively, the display means 4 may just display, from a side closer to the estimated value display area 11 (see Fig. 4), the change of the temperature, the change of the time segment, the change of the day of week, and the change of the humidity. Alternatively, the display means 4 may display the change of the values of the explanatory variables up to a predetermined ordinary number from the top (for example, up to the third place from the top) in the display priority order. Up to which ordinary number from the top the change of the values of the explanatory variables are displayed may be determined in advance.

According to the present exemplary embodiment, the display priority order can be determined for the explanatory variables provided for estimated value calculation, and the change of the values of the explanatory variables can be displayed. As a result, the change of the values of the explanatory variables having a large influence on the estimated value y can be displayed on a priority basis.

Further, according to the present exemplary embodiment, display the means 4 displays the change of the estimated values in a predetermined axis (typically, the time axis), and further displays change of the values of the explanatory variables along the common time axis. In other words, the display means 4 displays the change of the estimated value and the change of the values of the explanatory variables along the same axis. Accordingly, the analyst can easily and intuitively grasp how the change of the estimated value and the change of the explanatory variables are linked along the predetermined axis.

Further, an object to be displayed according to the display priority order is not limited to the change of the values of the explanatory variables. For example, the display means 4 may display names of the explanatory variables according to the display priority order in arranging and displaying the names of the explanatory variables. This point is similar in the exemplary embodiments below.

In the above exemplary embodiment, the case in which the number of estimation formulas used by the estimation means 2 is one has been exemplarily described. However, two or more estimation formulas used by the estimation means 2 may exist. For example, the estimation means 2 may select one estimation formula from among a plurality of estimation formulas and calculate the estimated value, using the selected estimation formula. Hereinafter, an operation of this case will be described as a modification of the first exemplary embodiment. Note that description of operations similar to those already described is omitted.

A configuration of an explanatory variable display priority order determination system in the present modification is similar to the configuration illustrated in Fig. 1. However, operations of an estimation means 2 and a display priority order determination means 3 are partially different. The operation of the display priority order determination means 3 will be described below.

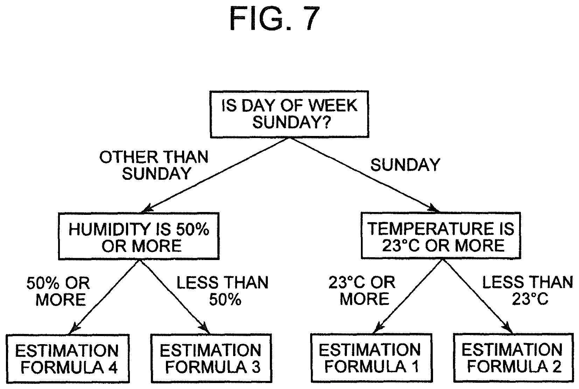

In the present modification, the estimation means 2 stores a model for selecting an estimation formula. This model is a model that enables determination of one estimation formula according to values of exemplary variables at individual points of time. Fig. 7 is a schematic diagram illustrating an example of the model for selecting the estimation formula. The estimation means 2 selects the estimation formula from the model schematically illustrated in Fig. 7 according to the values of the exemplary variables at a certain point of time, and calculates the estimated value according to the values of the explanatory variables at the certain point of time and the selected estimation formula. The operation to select the estimation formula and then calculate an estimated value y, using the estimation formula is similar to the operation in the first exemplary embodiment. The plurality of estimation formulas and the model for selecting the estimation formula are determined in advance using learning data.

Note that Fig. 7 illustrates a tree structure model. However, the model may have a plurality of tree structures having a common leaf and having different routes.

The progress of processing in the present modification is similar to the progress of processing in Fig. 5. However, in step S1, the display priority order determination means 3 determines a display priority order of the explanatory variables of which the values are input on the basis of coefficients of the explanatory variables in the plurality of estimation formulas to be used by the estimation means 2 for estimated value calculation.

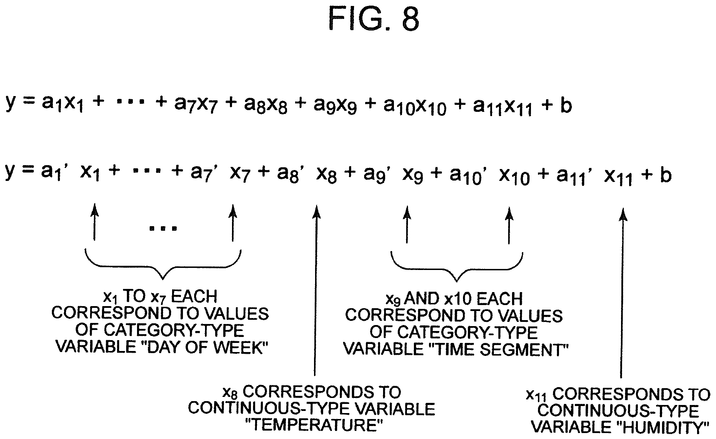

Assume that the plurality of estimation formulas used by the estimation means 2 are two estimation formulas illustrated in Fig. 8. Here, for ease of description, description will be given assuming that the estimation formulas are two. However, the number of the estimation formulas may be three or more. In the example illustrated in Fig. 8, explanatory variables $x_1$ to $x_{11}$ are included in the two estimation formulas. Similarly to the case illustrated in Fig. 6, explanatory variables $x_1$ to $x_7$ in the estimation formulas illustrated in Fig. 8 each correspond to values of an explanatory variable "day of week" as a category-type variable. Further, an explanatory variable $x_8$ in the estimation formulas corresponds to an explanatory variable "temperature" as a continuous-type variable. Further, explanatory variables $x_9$ and $x_{10}$ in the estimation formulas each correspond to values of an explanatory variable "time segment" as the category-type variable.

Further, an explanatory variable $x_{11}$ in the estimation formulas corresponds to an explanatory variable "humidity" as the continuous-type variable. The two estimation formulas illustrated in Fig. 8 are schematically illustrated for ease of description, and the numbers of $x_n$ in the estimation formulas and which explanatory variable the $x_n$ in the estimation formulas correspond to are not limited to the example illustrated in Fig. 8.

The display priority order determination means 3 calculates, for each category-type variable, a sum of absolute values of coefficients of the explanatory variables in all the estimation formulas, the explanatory variables corresponding to the values of the category-type variable. In the example illustrated in Fig. 8, the display priority order determination means 3 calculates, regarding the category-type variable "day of week", a sum of absolute values of coefficients of $x_1$ to $x_7$ corresponding to the values of the "day of week" in the first estimation formula and absolute values of coefficients of $x_1$ to $x_7$ corresponding to the values of the "day of week" in the second estimation formula. That is, the display priority order determination means 3 calculates $|a_1| + |a_2| + |a_3| + |a_4| + |a_5| + |a_6| + |a_7| + |a_1'| + |a_2'| + |a_3'| + |a_4'| + |a_5'| + |a_6'| + |a_7'|$. A calculation result is $A_1$. Similarly, the display priority order determination means 3 calculates, regarding the category-type variable "time segment", a sum of absolute values of coefficients of $x_9$ and $x_{10}$ corresponding to the values of the "time segment" in the first estimation formula and absolute values of coefficients of $x_9$ and $x_{10}$ corresponding to the values of the "time segment" in the second formula. That is, the display priority order determination means 3 calculates $|a_9| + |a_{10}| + |a_9'| + |a_{10}'|$. A calculation result is $A_2$. In this way, the display priority order determination means 3 calculates one value for each category-type variable.

Further, the display priority order determination means 3 calculates, for each continuous-type variable, a sum of absolute values of coefficients of the explanatory variables in all the estimation formulas, the explanatory variables corresponding to the continuous-type variable. In the example illustrated in Fig. 8, the display priority order determination means 3 calculates, regarding the continuous-type variable "temperature", a sum of an absolute value of a coefficient of $x_8$ corresponding to the "temperature" in the first estimation formula and an absolute value of a coefficient of $x_8$ corresponding to the "temperature" in the second estimation formula. That is, the display priority order determination means 3 calculates $|a_8| + |a_8'|$. A calculation result is $A_3$. Similarly, the display priority order determination means 3 calculates, regarding the continuous-type variable "humidity", a sum of absolute value of a coefficient of $x_{11}$ corresponding to the "humidity" in the first estimation formula and absolute value of a coefficient of $x_{11}$ corresponding to the "humidity" in the second estimation formula. That is, the display priority order determination means 3 calculates $|a_{11}| + |a_{11}'|$. This value is $A_4$. In this way, the display priority order determination means 3 calculates one value for each continuous-type variable.

Then, the display priority order determination means 3 determines the display priority order of the explanatory variables as the category-type variables and the explanatory variables as the continuous-type variables on the basis of the sum ($A_1$ and $A_2$ in this example) of the absolute values of the coefficients calculated for each category-type variable, and the sum ($A_3$ and $A_4$ in this example) of the absolute values of the coefficients calculated for each continuous-type variable. In the present example, the display priority order determination means 3 determines the display priority order of the "day of week", the "time segment", the "temperature", and the "humidity" in descending order of $A_1$, $A_2$, $A_3$, and $A_4$. For example, if $A_3 > A_2 > A_1 > A_4$ is satisfied, the display priority order determination means 3 determines the display priority order such that the "temperature", the "time segment", the "day of week", and the "humidity" are placed first, second, third, and fourth in order.

When the values of the explanatory variables are input to the explanatory variable display priority order determination system 1 (step S2), the estimation means 2 selects the estimation formula according to the values of the explanatory variables and the above-described model (the model for selecting the estimation formula), and calculates the estimated value according to the values of the explanatory variables and the selected estimation formula (step S3).

Step S4 is similar to step S4 that has already been described, and description is omitted.

In the present modification, an effect similar to that of the first exemplary embodiment can be obtained.

Note that execution timing of step S1 is not limited to the above-described examples in the first exemplary embodiment and its modification. For example, the explanatory variable display priority order determination system 1 may execute step S1 after step S3.

Second Exemplary Embodiment

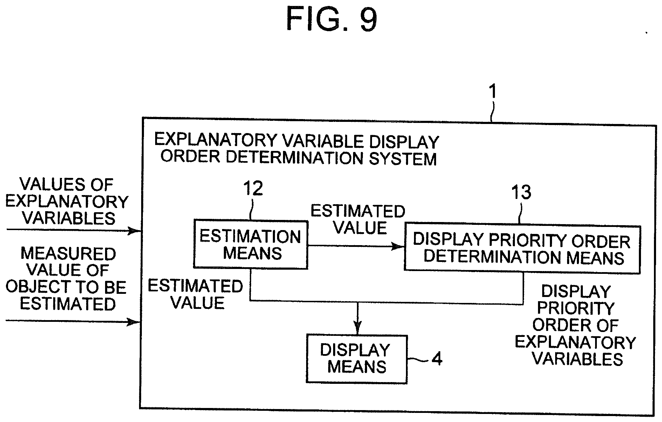

Fig. 9 is a block diagram illustrating a configuration example of an explanatory variable display priority order determination system of a second exemplary embodiment of the present invention. An explanatory variable display priority order determination system 1 of the second exemplary embodiment includes an estimation means 12, a display priority order determination means 13, and a display means 4. The display means 4 is similar to the display means 4 in the first exemplary embodiment, and description is omitted.

The explanatory variable display priority order determination system 1 of the present exemplary embodiment is input values of explanatory variables through an input device (illustration is omitted in Fig. 9), similarly to the first exemplary embodiment. Further, measured values of an object to be estimated corresponding to a set of the explanatory variables are also input to the explanatory variable display priority order determination system 1 through the input device. The explanatory variable display priority order determination system 1 of the present exemplary embodiment calculates an estimated value on the basis of the values of the explanatory variables at individual points of time where the measured values have already been obtained, and obtains an error between the estimated value and the measured value at individual points of time. Then, the explanatory variable display priority order determination system 1 derives an estimation formula for obtaining a residual that is an estimation value of the error (hereinafter, the estimation formula is described as residual estimation formula), and determines a display priority order of the exemplary variables of which values are input on the basis of coefficients of the explanatory variables in the residual estimation formula.

In the description below, assume that the explanatory variables input to the explanatory variable display priority order determination system 1 are associated with time information, as exemplarily illustrated in Fig. 2. Similarly, the measured values input to the explanatory variable display priority order determination system 1 are associated with the time information.

When the values of the explanatory variables at individual points of time are input, the estimation means 12 calculates an estimated value y, using an estimation formula expressed in the format of the formula (1) determined in advance, and the values of the explanatory variables at individual points of time. The operation to calculate the estimated value y, using the estimation formula has been described in the first exemplary embodiment, and thus description is omitted.

Note that the estimation means 12 may select one estimation formula from among a plurality of estimation formulas, and calculate the estimated value y, using the estimation formula, in calculating the estimated value y at individual points of time, similarly to the modification of the first exemplary embodiment.

The estimation means 12 sends the estimated values y at points of time of calculation, to the display priority order determination means 13 and the display means 4.

The display priority order determination means 13 calculates, for each individual point of time, an error between the estimated value y calculated by the estimation means 12 and the measured value input to the explanatory variable display priority order determination system 1. That is, the display priority order determination means 13 calculates, for each individual point of time, an error Z by calculation using the formula (2) below, where the measured value Y and the error between the estimated value y and the measured value Y is Z.

$$Z = |y - Y| \quad \ldots \quad \text{Formula (2)}$$

The display priority order determination means 13 derives the estimation formula (residual estimation formula) for obtaining a residual that is an estimated value of the error after the calculation of the errors Z at individual points of time. Hereinafter, the residual is expressed by the sign z. Here, the display priority order determination means 13 derives a residual estimation formula including explanatory variables $x_1$, $x_2$, ..., $x_n$ in the estimation formula described in the formula (1). The display priority order determination means 13 may just derive the residual estimation formula by performing a regression analysis using the values of the explanatory variables and the errors Z at individual points of time. The error estimation formula is expressed by the formula (3) below.

$$z = c_1 x_1 + c_2 x_2 + \ldots + c_n x_n + d \quad \ldots \quad \text{Formula (3)}$$

d is a constant term, and $c_1$ to $c_n$ are respective coefficients of $x_1$ to $x_n$.

The display priority order determination means 13 determines a display priority order of the explanatory variables of which the values are input on the basis of coefficients (to be more specific, absolute values of coefficients) of the explanatory variables in the residual estimation formula expressed by the formula (3).

The operation to determine the display priority order on the basis of the coefficients of the explanatory variables in the residual estimation formula by the display priority order determination means 13 is similar to the operation to determine the display priority order on the basis of the coefficients of the explanatory variables in the estimation formula expressed by the formula (1) by the display priority order determination means 3 in the first exemplary embodiment. That is, the display priority order determination means 13 calculates, for each category-type variable, a sum of the absolute values of the coefficients of the explanatory variables in the residual estimation formula, the explanatory variables corresponding to values of the category-type variable. Then, the display priority order determination means 13 determines the display priority order of the explanatory variables as the category-type variables and the explanatory variables as continuous-type variables on the basis of the sum of the absolute values of the coefficients calculated for each category-type variable, and the absolute values of the coefficients of the explanatory variables in the residual estimation formula, the explanatory variables corresponding to the continuous-type variables. To be specific, the display priority order determination means 13 determines the display priority order of the explanatory variables as the category-type variables and the explanatory variables as the continuous-type variables in descending order of the value (the sum of the absolute values of the coefficients) calculated for each category-type variable and the absolute values of the coefficients in the residual estimation formula, the coefficients corresponding to the continuous-type variables.

The display priority order determination means 13 sends the determined display priority order of the explanatory variables to the display means 4.

The estimation means 12, the display priority order determination means 13, and the display means 4 are realized by a CPU of a computer including an input device and a display device, for example. In this case, the CPU may just read an explanatory variable display priority order determination program from a program recording medium such as a program storage device (illustration is omitted in Fig. 9), for example, and may just be operated as the estimation means 12, the display priority order determination means 13, and the display means 4 according to the explanatory variable display priority order determination program. Further, the respective means may be realized by different pieces of hardware.

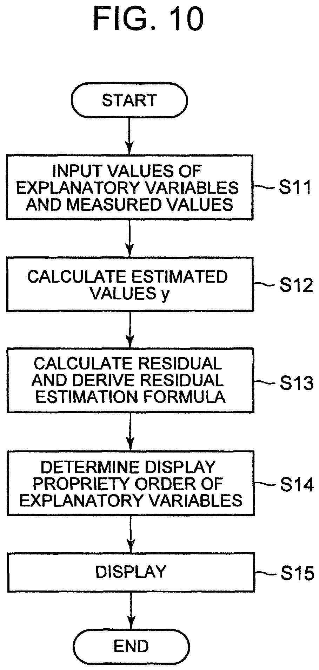

Next, the progress of processing will be described. Fig. 10 is a flowchart illustrating an example of progress of processing of the second exemplary embodiment.

When the values of the explanatory variables at individual points of time, and the measured values Y of the object to be estimated at the individual points of time are input (step S11), the estimation means 12 calculates the estimated values y at the individual points of time according to the values of the explanatory variables at the individual points of time and the estimation formula (step S12).

Next to step S12, the display priority order determination means 13 calculates, for each individual point of time, the error Z between the estimated value y calculated by the estimation means 12 and the measured value Y input in step S11, by the formula (2). Then, the display priority order determination means 13 derives the error estimation formula expressed in the format of the formula (3) by a regression analysis, using the errors Z at the individual points of time, and the values of the explanatory variables at the individual points of time input in step S 11, for example (step S 13).

Next, the display priority order determination means 13 determines the display priority order of the explanatory variables of which the values are input on the basis of the coefficients of the explanatory variables in the residual estimation formula (step S 14). As described above, the operation to determine the display priority order on the basis of the coefficients of the explanatory variables in the residual estimation formula by the display priority order determination means 13 is similar to the operation to determine the display priority order on the basis of the coefficients of the explanatory variables in the estimation formula expressed by the formula (1) by the display priority order determination means 3 in the first exemplary embodiment.

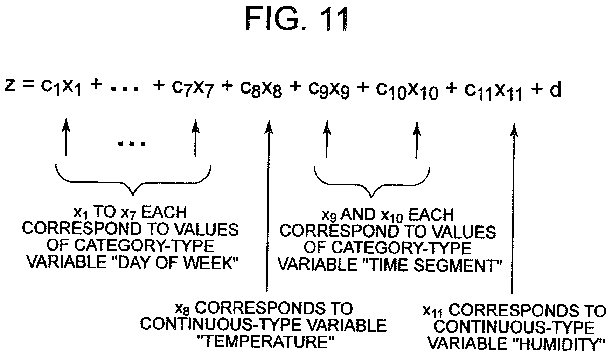

Processing of step 14 will be specifically described. Assume that the residual derivation formula derived in step S13 is the formula illustrated in Fig. 11. Similarly to the case illustrated in Fig. 6, explanatory variables $x_1$ to $x_7$ in the residual estimation formula illustrated in Fig. 11 each correspond to values of an explanatory variable "day of week" as a category-type variable. Further, an explanatory variable $x_8$ in the residual estimation formula corresponds to an explanatory variable "temperature" as a continuous-type variable. Further, explanatory variables $x_9$ and $x_{10}$ in the residual estimation formula each correspond to values of an explanatory variable "time segment" as the category-type variable. Further, an explanatory variable $x_{11}$ in the residual estimation formula corresponds to an explanatory variable "humidity" as the continuous-type variable. The residual estimation formula illustrated in Fig. 11 is schematically illustrated for ease of description, and the numbers of $x_n$ in the estimation formula and which explanatory variable the $x_n$ in the residual estimation formulas correspond to are not limited to the example illustrated in Fig. 11.

The display priority order determination means 13 calculates, for each category-type variable, the sum of the absolute values of the coefficients of the explanatory variables in the residual estimation formula, the explanatory variables corresponding to the values of the category-type variable. In the example illustrated in Fig. 11, the display priority order determination means 13 calculates, regarding the category-type variable "day of week", the sum of the absolute values of the coefficients of $x_1$ to $x_7$ corresponding to the values of the "day of week". That is, the display priority order determination means 13 calculates $|c_1| + |c_2| + |c_3| + |c_4| + |c_5| + |c_6| + |c_7|$. A calculation result is described as $c_{1 \text{ to } 7}$. Similarly, the display priority order determination means 13 calculates, regarding the category-type variable "time segment", the sum of the absolute values of the coefficients of $x_9$ and $x_{10}$ corresponding to the values of the "time segment". That is, the display priority order determination means 13 calculates $|c_9| + |c_{10}|$. A calculation result is described as $c_{9 \text{ to } 10}$.

Then, the display priority order determination means 13 determines the display priority order of the explanatory variables "day of week" and "time segment" as the category-type variables and the explanatory variables "temperature" and "humidity" as the continuous-type variables on the basis of the values $c_{1 \text{ to } 7}$, $c_{9 \text{ to } 10}$ calculated for each category-type variable and the absolute values of the coefficients of the explanatory variables in the residual estimation formula, the explanatory variables corresponding to the continuous-type variables "temperature" and "humidity". The absolute value of the coefficient of the explanatory variable $x_8$ in the residual estimation formula, the explanatory variable $x_8$ corresponding to the "temperature", is $|c_8|$. The absolute value of the coefficient of the explanatory variable $x_{11}$ in the residual estimation formula, the explanatory variable $x_{11}$ corresponding to the "humidity", is $|c_{11}|$. The display priority order determination means 13 determines the display priority order of the "day of week", the "time segment", the "temperature", and the "humidity" in the descending order of $c_{1 \text{ to } 7}$, $c_{9 \text{ to } 10}$, $|c_8|$, and $|c_{11}|$.

Next, as exemplarily illustrated in Fig. 4, the display means 4 displays change of the estimated value y, and displays change of the values of the explanatory variables according to the display priority order determined in step S14 (step S15). step S 15 is similar to step S4 in the first exemplary embodiment. For example, the display means 4 displays the change of the estimated value y and the change of the values of the explanatory variables along a common time axis. Note that the display means 4 may display change of the measured value Y together with the change of the estimated value y in an estimated value display area 11, for example.

As described above, according to the present exemplary embodiment, the display priority order can be determined for the explanatory variables provided for estimated value calculation, and the change of the explanatory variables can be displayed. Especially, in the present exemplary embodiment, the display priority order determination means 13 determines the display priority order on the basis of the absolute values of the coefficients of the explanatory variables in the residual estimation formula. Therefore, change of the values of the explanatory variables having a high degree to become a cause of a large error can be displayed on a priority basis.

An effect of the present exemplary embodiment will be specifically described. An analyst can grasp whether the explanatory variable substantially influences the residual by checking the order to display of the explanatory variable. Accordingly, the analyst can obtain a tip for the explanatory variable needed to be newly added to estimation, for example. Assume that the display means 4 displays the explanatory variables in order of the "day of week", the "time segment", the "temperature", and the "humidity". The analyst who saw the display result analyzes details of the error of each day of week. Here, for example, assume that the error of Friday is larger than the errors of other days of week. Then, assume that, when further checking over the details, the analyst has found that an event that substantially influences an object variable (for example, power consumption or the like) is took place only on Friday of the third week of every month. In response to that, the analyst can figure out addition of a new explanatory variable "existence of an event".

In this way, if the analyst can notice existence of the explanatory variable that substantially influences the residual, the analyst can be prompted to notice the existence of the new explanatory variable that the analyst has never noticed before.

Further, assume that it is found that the explanatory variable "temperature" substantially influences the residual. The analyst confirms details of change of the value of the temperature with the fact. Assume that, as a result, the explanatory variable "temperature" contains many noises. In response to that, the analyst can figure out execution of data cleansing processing for the explanatory variable "temperature".

In this way, if the analyst can notice the existence of the explanatory variable that substantially influences the residual, the analyst can be prompted to notice the existence of the explanatory variable for which the data cleansing processing is executed.

Further, for example, assume that it is found that the explanatory variable "time segment" substantially influence the residual. In the above example, the values taken by the explanatory variable "time segment" are only the "outside business hours" and the "within business hours". The analyst can conceive that is better to segment the values taken by the explanatory variable "time segment" into more details on the basis of the substantial influence of the explanatory variable "time segment" on the explanatory variable. For example, the analyst can conceive that the values taken by the explanatory variable "time segment" can be segmented into the "outside business hours", "within morning hours", "within afternoon hours", and the like. Similarly, for example, in a case where it is found that the explanatory variable "period (unit of 10 years)" substantially influences the residual, the analyst can conceive that it is better to treat the explanatory variable as the explanatory variable of more detailed "age (unit of one year)".

In this way, if the analyst can notice the existence of the explanatory variable that substantially influences the residual, the analyst can be prompted to notice the existence of the explanatory variable that needs more refinement or segmentation.

In data mining, it is not uncommon that types of the explanatory variables to be analyzed may be several hundreds of types or several thousands of types. In such a case, it is not easy for the analyst to conduct detailed examination about all the explanatory variables. By prioritizing the explanatory variables in descending order of substantial influence on the residual, like the present exemplary embodiment, the analyst can select the explanatory variable to watch out, from among a large amount of the explanatory variable. Efficiency of data analysis work is increased, accordingly.

In the second exemplary embodiment, the display priority order determination means 13 may use another formula in place of the residual estimation formula. For example, the display priority order determination means 13 may derive an estimation formula of an absolute value of an error, and determine the display priority order of the explanatory variables, using the estimation formula. Further, for example, the display priority order determination means 13 may derive a formula for analyzing and determining whether the absolute value of the error becomes a certain value or more, and determine the display priority order of the explanatory variables, using the formula.

Further, an algorithm to create the residual estimation formula and the various formulas exemplarily described above and an algorithm to create the estimation formula of the object variable may not be necessarily matched. Further, after the estimation formula of the object variable is created by the regression analysis, determination and analysis as to whether "the error becomes an error of 10 or more" may be performed with the determination tree.

In the above exemplary embodiments, the example in which the values of the explanatory variables and the measured value of the estimation object are input in association with the time information has been described. In this case, the display means 4 may just display the change of the estimated value and the change of the explanatory variables over time. Further, the values of the explanatory variables and the measured value of the estimation object may be input in association with information other than the time information, and the display means 4 may just display the change of the estimated value and the change of the explanatory variables along the order other than time.

Further, the explanatory variable display priority order determination system 1 of the present invention may be mounted on an estimation device that performs estimation by an estimation formula obtained through learning. Alternatively, the explanatory variable display priority order determination system 1 of the present invention may be mounted on a learning device that learns an estimation formula and the like. For example, the leaning device may have an estimation function by the estimation formula in order to check the learned estimation formula. The explanatory variable display priority order determination system 1 may be mounted on such a learning device.

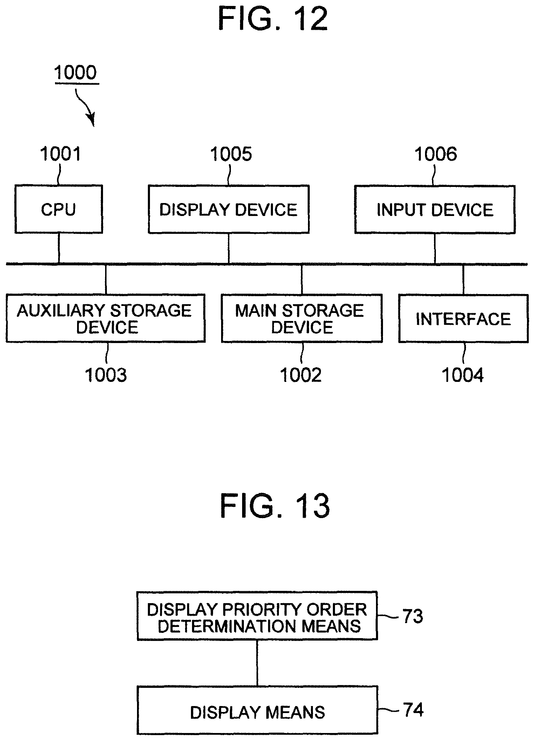

Fig. 12 is a schematic block diagram illustrating a configuration example of a computer according to the exemplary embodiments of the present invention. A computer 1000 includes a CPU 1001, a main storage device 1002, an auxiliary storage device 1003, an interface 1004, a display device 1005, and an input device 1006.

The explanatory variable display priority order determination system 1 of the exemplary embodiments is mounted on the computer 1000. The operation of the explanatory variable display priority order determination system 1 is stored in the auxiliary storage device 1003 in a format of a program (explanatory variable display priority order determination program). The CPU 1001 reads the program from the auxiliary storage device 1003, expands the program on the main storage device 1002, and executes the above processing according to the program.

The auxiliary storage device 1003 is an example of a non-temporary physical medium. Examples of the non-temporary physical medium include a magnetic disk, a magneto-optical disk, a CD-ROM, a DVD-ROM, and a semiconductor memory connected through the interface 1004. In a case where the program is distributed to the computer 1000 through a communication line, the computer 1000 that has received the distribution may expand the program on the main storage device 1002 and execute the processing.

Further, the program may realize a part of the processing. Further, the program may be a difference program that realizes the processing in combination with another program already stored in the auxiliary storage device 1003.

Next, a minimum configuration of the present invention will be described. Fig. 13 is a block diagram illustrating an example of a minimum configuration of the present invention. The explanatory variable display priority order determination system of the present invention includes display priority order determination means 73 and display means 74.

The display priority order determination means 73 (for example, the display priority order determination means 13 of the second exemplary embodiment) determines the display priority order of the explanatory variables to be used in estimation of a value by the estimation formula on the basis of a residual as an estimation amount of an error between the estimated value by the estimation formula and the measured value. To be more specific, the display priority order determination means 73 determines the display priority order of the explanatory variables on the basis of the magnitude of influence of the explanatory variables on the residual.

The display means 74 (for example, the display means 4 of the second exemplary embodiment) displays the explanatory variables according to the display priority order.

With such a configuration, the effect of the present invention can be obtained.

Further, the display priority order determination means 73 and the display means 74 may be operated as follows.

The display priority order determination means 73 (for example, the display priority order determination means 3 of the first exemplary embodiment) determines the display priority order of the explanatory variables to be used in estimation of a value by the estimation formula on the basis of the coefficients of the explanatory variables in the estimation formula.

The display means 74 (for example, the display means 4 of the first exemplary embodiment) displays the change of the estimated value by the estimation formula and the change of the values of the explanatory variables along a predetermined axis.

The above-described exemplary embodiments can also be described like, but are not limited to, the supplementary notes below.

(Supplementary Note 1)

An explanatory variable display priority order determination system including:

a display priority order determination means configured to determine a display priority order of explanatory variables to be used in estimation of a value by an estimation formula on the basis of a residual that is an estimation amount of an error between an estimated value by the estimation formula and a measured value; and

a display means configured to display the explanatory variables according to the display priority order, wherein the display priority order determination means determines the display priority order of the explanatory variables on the basis of magnitude of an influence of the explanatory variables on the residual.

(Supplementary Note 2)

The explanatory variable display priority order determination system according to the supplementary note 1, wherein

the display priority order determination means derives a residual estimation formula for estimating the residual that is the estimation amount of the error between the estimated value and the measured value, and determines the display priority order on the basis of coefficients of the explanatory variables in the residual estimation formula.

(Supplementary Note 3)

The explanatory variable display priority order determination system according to the supplementary note 2, wherein

the display priority order determination means calculates, for each category-type variable, a sum of absolute values of the coefficients of the explanatory variables in the residual estimation formula, the explanatory variables corresponding to values of the category-type variable, and determines the display priority order of the explanatory variables as the category-type variables and the explanatory variables as continuous-type variables, on the basis of the sum of the absolute values of the coefficients calculated for each category-type variable and absolute values of coefficients of the explanatory variables in the residual estimation formula, the explanatory variables corresponding to the continuous-type variables.

(Supplementary Note 4)

The explanatory variable display priority order determination system according to any one of the supplementary notes 1 to 3, wherein

the display means further displays change of the estimated value by the estimation formula together with change of the measured value corresponding to the estimated value.

(Supplementary Note 5)

The explanatory variable display priority order determination system according to the supplementary note 4, wherein

the display means displays the change of the estimated value by the estimation formula and the change of the measured value, and change of a value of the explanatory variable along a predetermined axis.

(Supplementary Note 6)

An explanatory variable display priority order determination system including:

a display priority order determination means configured to determine a display priority order of explanatory variables to be used in estimation of a value by an estimation formula on the basis of coefficients of the explanatory variables in the estimation formula; and

a display means configured to display change of an estimated value by the estimation formula and change of a value of the explanatory variable along a predetermined axis.

(Supplementary Note 7)

The explanatory variable display priority order determination system according to the supplementary note 6, wherein

the display priority order determination means sets the display priority order to be higher, of the explanatory variable having a larger absolute value of the coefficient, and

the display means displays the change of the value of the explanatory variable in the higher display priority order, to an area closer to an area where the change of the estimated value is displayed.

(Supplementary Note 8)

The explanatory variable display priority order determination system according to the supplementary notes 6 or 7, wherein

the display priority order determination means calculates, for each category-type variable, a sun of absolute values of the coefficients of the explanatory variables in the estimation formula, the explanatory variables corresponding to values of the category-type variable, and determines the display priority order of the explanatory variables as the category-type variables and the explanatory variables as continuous-type variables, on the basis of the sum of the absolute values of the coefficients calculated for each category-type variable and absolute values of coefficients of the explanatory variables in the estimation formula, the explanatory variables corresponding to the continuous-type variables.

(Supplementary Note 9)

The explanatory variable display priority order determination system according to the supplementary note 6 or 7, wherein,

in a case where a plurality of the estimation formulas to be selected to calculate the estimated value exists,

the display priority order determination means calculates, for each category-type variable, a sum of absolute values of the coefficients of the explanatory variables in all the estimation formulas, the explanatory variables corresponding to values of the category-type variable, calculates, for each continuous-type variable, a sum of absolute values of the coefficients of the explanatory variables in all the estimation formulas, the explanatory variables corresponding to the continuous-type variable, and determines the display priority order of the explanatory variables as the category-type variables and the explanatory variables as the continuous-type variables, on the basis of the sum of the absolute values of the coefficients calculated for each category-type variable and the sum of the absolute values of the coefficients calculated for each continuous-type variable.

(Supplementary Note 10)

An explanatory variable display priority order determination method including:

determining a display priority order of explanatory variables to be used in estimation of a value by an estimation formula on the basis of a residual that is an estimation amount of an error between an estimated value by the estimation formula and a measured value;
displaying the explanatory variables according to the display priority order; and
determining the display priority order of the explanatory variables on the basis of magnitude of an influence of the explanatory variables on the residual, in determining the display priority order.

(Supplementary Note 11)

An explanatory variable display priority order determination method including:

determining a display priority order of explanatory variables to be used in estimation of a value by an estimation formula on the basis of coefficients of the explanatory variables in the estimation formula; and
displaying change of an estimated value by the estimation formula and change of a value of the explanatory variable along a predetermined axis.

(Supplementary Note 12)

An explanatory variable display priority order determination program for causing a computer to execute:

display priority order determination processing of determining a display priority order of explanatory variables to be used in estimation of a value by an estimation formula on the basis of a residual that is an estimation amount of an error between an estimated value by the estimation formula and a measured value; and
display processing of displaying the explanatory variables according to the display priority order, wherein
the display priority order of the explanatory variables is determined on the basis of magnitude of an influence of the explanatory variables on the residual in the display priority order determination processing.

(Supplementary Note 13)

An explanatory variable display priority order determination program for causing a computer to execute:

display priority order determination processing of determining a display priority order of explanatory variables to be used in estimation of a value by an estimation formula on the basis of coefficients of the explanatory variables in the estimation formula; and
display processing of displaying change of an estimated value by the estimation formula and change of a value of the explanatory variable along a predetermined axis.

The present invention has been described by reference to the exemplary embodiments. However, the present invention is not limited by the exemplary embodiments. The configurations and details of the present invention can be modified in various ways within the scope of the present invention in a manner that a person skilled in the art can understand.

This application claims priority based on Japanese Patent Application 2014-216839 filed October 24, 2014, the entire contents of which are incorporated herein by reference.

Industrial Applicability

The present invention is favorably applicable to devices that present change of values of various explanatory variables.

Reference Signs List

1        Explanatory variable display priority order determination system
2, 12    Estimation means
3, 13    Display priority order determination means
4        Display means

**Claims**

1.  An explanatory variable display priority order determination system comprising:

    a display priority order determination means configured to determine a display priority order of explanatory variables to be used in estimation of a value by an estimation formula on the basis of a residual that is an estimation amount of an error between an estimated value by the estimation formula and a measured value; and
    a display means configured to display the explanatory variables according to the display priority order, wherein the display priority order determination means determines the display priority order of the explanatory variables on the basis of magnitude of an influence of the explanatory variables on the residual.

2.  The explanatory variable display priority order determination system according to claim 1, wherein the display priority order determination means derives a residual estimation formula for estimating the residual that is the estimation amount of the error between the estimated value and the measured value, and determines the display priority order on the basis of coefficients of the explanatory variables in the residual estimation formula.

3.  The explanatory variable display priority order determination system according to claim 2, wherein the display priority order determination means calculates, for each category-type variable, a sum of absolute values of the coefficients of the explanatory variables in the residual estimation formula, the explanatory variables corresponding to values of the category-type variable, and determines the display priority order of the explanatory variables as the category-type variables and the explanatory variables as continuous-type variables, on the basis of the sum of the absolute values of the coefficients calculated for each category-type variable and absolute values of coefficients of the explanatory variables in the residual estimation formula, the explanatory variables corresponding to the continuous-type variables.

4.  The explanatory variable display priority order determination system according to any one of claims 1 to 3, wherein

the display means further displays change of the estimated value by the estimation formula together with change of the measured value corresponding to the estimated value.

5. The explanatory variable display priority order determination system according to claim 4, wherein the display means displays the change of the estimated value by the estimation formula, the change of the measured value, and change of a value of the explanatory variable along a predetermined axis.

6. An explanatory variable display priority order determination system comprising:

a display priority order determination means configured to determine a display priority order of explanatory variables to be used in estimation of a value by an estimation formula on the basis of coefficients of the explanatory variables in the estimation formula; and
a display means configured to display change of an estimated value by the estimation formula and change of a value of the explanatory variable along a predetermined axis.

7. The explanatory variable display priority order determination system according to claim 6, wherein the display priority order determination means sets the display priority order to be higher, as the explanatory variable has a larger absolute value of the coefficient, and
the display means displays the change of the value of the explanatory variable in an area closer to an area where the change of the estimated value is displayed, as the explanatory variable has a higher display priority order.

8. The explanatory variable display priority order determination system according to claim 6 or 7, wherein the display priority order determination means calculates, for each category-type variable, a sum of absolute values of the coefficients of the explanatory variables in the estimation formula, the explanatory variables corresponding to values of the category-type variable, and determines the display priority order of the explanatory variables as the category-type variables and the explanatory variables as continuous-type variables, on the basis of the sum of the absolute values of the coefficients calculated for each category-type variable and absolute values of coefficients of the explanatory variables in the estimation formula, the explanatory variables corresponding to the continuous-type variables.

9. The explanatory variable display priority order determination system according to claim 6 or 7, wherein, in a case where a plurality of the estimation formulas to be selected to calculate the estimated value exists, the display priority order determination means calculates, for each category-type variable, a sum of absolute values of the coefficients of the explanatory variables in all the estimation formulas, the explanatory variables corresponding to values of the category-type variable, calculates, for each continuous-type variable, a sum of absolute values of the coefficients of the explanatory variables in all the estimation formulas, the explanatory variables corresponding to the continuous-type variable, and determines the display priority order of the explanatory variables as the category-type variables and the explanatory variables as the continuous-type variables on the basis of the sum of the absolute values of the coefficients calculated for each category-type variable and the sum of the absolute values of the coefficients calculated for each continuous-type variable.

10. An explanatory variable display priority order determination method comprising:

determining a display priority order of explanatory variables to be used in estimation of a value by an estimation formula on the basis of a residual that is an estimation amount of an error between an estimated value by the estimation formula and a measured value;
displaying the explanatory variables according to the display priority order; and
determining the display priority order of the explanatory variables on the basis of magnitude of an influence of the explanatory variables on the residual, in determining the display priority order.

11. An explanatory variable display priority order determination method comprising:

determining a display priority order of explanatory variables to be used in estimation of a value by an estimation formula on the basis of coefficients of the explanatory variables in the estimation formula; and
displaying change of an estimated value by the estimation formula and change of a value of the explanatory variable along a predetermined axis.

12. An explanatory variable display priority order determination program for causing a computer to execute:

display priority order determination processing of determining a display priority order of explanatory variables to be used in estimation of a value by an estimation formula on the basis of a residual that is an estimation amount of an error between an estimated value by the estimation formula and a measured value; and display processing of displaying the explanatory variables according to the display priority order, wherein the display priority order of the explanatory variables is determined on the basis of magnitude of an influence of the explanatory variables on the residual in the display priority order determination processing.

13. An explanatory variable display priority order determination program for causing a computer to execute:

display priority order determination processing of determining a display priority order of explanatory variables to be used in estimation of a value by an estimation formula on the basis of coefficients of the explanatory variables in the estimation formula; and
display processing of displaying change of an estimated value by the estimation formula and change of a value of the explanatory variable along a predetermined axis.

# FIG. 1

VALUES OF
EXPLANATORY
VARIABLES →

1

EXPLANATORY VARIABLE DISPLAY
ORDER DETERMINATION SYSTEM

2

ESTIMATION
MEANS

3

DISPLAY PRIORITY ORDER
DETERMINATION MEANS

ESTIMATED
VALUE

DISPLAY PRIORITY
ORDER OF
EXPLANATORY
VARIABLES

DISPLAY
MEANS    4

# FIG. 2

| DATE | TIME | DAY OF WEEK | TEMPER-ATURE (°C) | TIME SEGMENT | HUMIDITY (%) |
|---|---|---|---|---|---|
| SEPTEMBER 15 | 00:01-06:00 | MON | 18.0 | OUTSIDE BUSINESS HOUR | 44% |
| SEPTEMBER 15 | 06:01-12:00 | MON | 21.4 | WITHIN BUSINESS HOUR | 45% |
| SEPTEMBER 15 | 12:01-18:00 | MON | 25.6 | WITHIN BUSINESS HOUR | 55% |
| SEPTEMBER 15 | 18:01-00:00 | MON | 22.3 | WITHIN BUSINESS HOUR | 80% |
| SEPTEMBER 16 | 00:01-06:00 | TUE | 17.5 | OUTSIDE BUSINESS HOUR | 90% |
| SEPTEMBER 16 | 06:01-12:00 | TUE | 17.4 | WITHIN BUSINESS HOUR | 87% |
| SEPTEMBER 16 | 12:01-18:00 | TUE | 18.5 | WITHIN BUSINESS HOUR | 65% |
| SEPTEMBER 16 | 18:01-00:00 | TUE | 17.0 | WITHIN BUSINESS HOUR | 55% |
| SEPTEMBER 17 | 00:01-06:00 | WED | 15.0 | OUTSIDE BUSINESS HOUR | 49% |
| SEPTEMBER 17 | 06:01-12:00 | WED | 19.9 | WITHIN BUSINESS HOUR | 67% |
| SEPTEMBER 17 | 12:01-18:00 | WED | 28.7 | WITHIN BUSINESS HOUR | 66% |
| SEPTEMBER 17 | 18:01-00:00 | WED | 23.6 | WITHIN BUSINESS HOUR | 78% |
| SEPTEMBER 18 | 00:01-06:00 | THU | 16.0 | OUTSIDE BUSINESS HOUR | 76% |
| SEPTEMBER 18 | 06:01-12:00 | THU | 20.0 | WITHIN BUSINESS HOUR | 55% |
| SEPTEMBER 18 | 12:01-18:00 | THU | 22.0 | WITHIN BUSINESS HOUR | 50% |
| SEPTEMBER 18 | 18:01-00:00 | THU | 21.0 | WITHIN BUSINESS HOUR | 61% |

# FIG. 3

| DATE | TIME | ESTIMATED VALUE (POWER CONSUMPTION AMOUNT) |
|---|---|---|
| SEPTEMBER 15 | 00:01-06:00 | 698.8 |
| SEPTEMBER 15 | 06:01-12:00 | 869.8 |
| SEPTEMBER 15 | 12:01-18:00 | 1035.6 |
| SEPTEMBER 15 | 18:01-00:00 | 903.7 |
| SEPTEMBER 16 | 00:01-06:00 | 676.9 |
| SEPTEMBER 16 | 06:01-12:00 | 709.5 |
| SEPTEMBER 16 | 12:01-18:00 | 754.2 |
| SEPTEMBER 16 | 18:01-00:00 | 695.3 |
| SEPTEMBER 17 | 00:01-06:00 | 579.7 |
| SEPTEMBER 17 | 06:01-12:00 | 809.2 |
| SEPTEMBER 17 | 12:01-18:00 | 1157.7 |
| SEPTEMBER 17 | 18:01-00:00 | 955.2 |
| SEPTEMBER 18 | 00:01-06:00 | 639.1 |
| SEPTEMBER 18 | 06:01-12:00 | 835.0 |
| SEPTEMBER 18 | 12:01-18:00 | 914.4 |
| SEPTEMBER 18 | 18:01-00:00 | 874.3 |

# FIG. 4

# FIG. 5

```
           ( START )
               |
               v
  +---------------------------+
  |  DETERMINE DISPLAY        |
  |  PRIORITY ORDER OF        |~ S1
  |  EXPLANATORY VARIABLES    |
  +---------------------------+
               |
               v
  +---------------------------+
  |  INPUT VALUES OF          |~ S2
  |  EXPLANATORY VARIABLES    |
  +---------------------------+
               |
               v
  +---------------------------+
  |  CALCULATE ESTIMATED      |~ S3
  |  VALUE y                  |
  +---------------------------+
               |
               v
  +---------------------------+
  |  DISPLAY                  |~ S4
  +---------------------------+
               |
               v
           (  END  )
```

# FIG. 6

$$y = a_1x_1 + \ldots + a_7x_7 + a_8x_8 + a_9x_9 + a_{10}x_{10} + a_{11}x_{11} + b$$

$x_1$ TO $x_7$ EACH
CORRESPOND TO VALUES
OF CATEGORY-TYPE
VARIABLE "DAY OF WEEK"

$x_9$ AND $x_{10}$ EACH
CORRESPOND TO VALUES
OF CATEGORY-TYPE
VARIABLE "TIME SEGMENT"

$x_8$ CORRESPONDS TO
CONTINUOUS-TYPE VARIABLE
"TEMPERATURE"

$x_{11}$ CORRESPONDS TO
CONTINUOUS-TYPE
VARIABLE "HUMIDITY"

EP 3 211 579 A1

# FIG. 7

```
                    ┌─────────────────┐
                    │  IS DAY OF WEEK │
                    │     SUNDAY?     │
                    └─────────────────┘
      OTHER THAN                              SUNDAY
        SUNDAY

   ┌─────────────────┐              ┌─────────────────┐
   │ HUMIDITY IS 50% │              │ TEMPERATURE IS  │
   │    OR MORE      │              │  23°C OR MORE   │
   └─────────────────┘              └─────────────────┘

  50% OR      LESS THAN          23°C OR        LESS THAN
   MORE          50%              MORE             23°C

┌───────────┐ ┌───────────┐   ┌───────────┐ ┌───────────┐
│ESTIMATION │ │ESTIMATION │   │ESTIMATION │ │ESTIMATION │
│FORMULA 4  │ │FORMULA 3  │   │FORMULA 1  │ │FORMULA 2  │
└───────────┘ └───────────┘   └───────────┘ └───────────┘
```

## FIG. 8

$$y = a_1 x_1 + \cdots + a_7 x_7 + a_8 x_8 + a_9 x_9 + a_{10} x_{10} + a_{11} x_{11} + b$$

$$y = a_1' x_1 + \cdots + a_7' x_7 + a_8' x_8 + a_9' x_9 + a_{10}' x_{10} + a_{11}' x_{11} + b$$

$x_1$ TO $x_7$ EACH CORRESPOND TO VALUES OF CATEGORY-TYPE VARIABLE "DAY OF WEEK"

$x_9$ AND $x_{10}$ EACH CORRESPOND TO VALUES OF CATEGORY-TYPE VARIABLE "TIME SEGMENT"

$x_8$ CORRESPONDS TO CONTINUOUS-TYPE VARIABLE "TEMPERATURE"

$x_{11}$ CORRESPONDS TO CONTINUOUS-TYPE VARIABLE "HUMIDITY"

# FIG. 9

1

**EXPLANATORY VARIABLE DISPLAY ORDER DETERMINATION SYSTEM**

VALUES OF
EXPLANATORY
VARIABLES

MEASURED
VALUE OF
OBJECT TO BE
ESTIMATED

12

| ESTIMATION MEANS |

ESTIMATED
VALUE

13

| DISPLAY PRIORITY ORDER DETERMINATION MEANS |

ESTIMATED
VALUE

| DISPLAY MEANS | ~4

DISPLAY
PRIORITY
ORDER OF
EXPLANATORY
VARIABLES

# FIG. 10

```
        ┌─────────────┐
        │    START    │
        └─────────────┘
               │
               ▼
┌──────────────────────────┐
│     INPUT VALUES OF      │
│  EXPLANATORY VARIABLES   │──── S11
│   AND MEASURED VALUES    │
└──────────────────────────┘
               │
               ▼
┌──────────────────────────┐
│   CALCULATE ESTIMATED    │──── S12
│        VALUES y          │
└──────────────────────────┘
               │
               ▼
┌──────────────────────────┐
│    CALCULATE RESIDUAL    │
│   AND DERIVE RESIDUAL    │──── S13
│    ESTIMATION FORMULA    │
└──────────────────────────┘
               │
               ▼
┌──────────────────────────┐
│    DETERMINE DISPLAY     │
│   PROPRIETY ORDER OF     │──── S14
│  EXPLANATORY VARIABLES   │
└──────────────────────────┘
               │
               ▼
┌──────────────────────────┐
│         DISPLAY          │──── S15
└──────────────────────────┘
               │
               ▼
        ┌─────────────┐
        │     END     │
        └─────────────┘
```

# FIG. 11

$$z = c_1 x_1 + \ldots + c_7 x_7 + c_8 x_8 + c_9 x_9 + c_{10} x_{10} + c_{11} x_{11} + d$$

$x_1$ TO $x_7$ EACH
CORRESPOND TO VALUES
OF CATEGORY-TYPE
VARIABLE "DAY OF WEEK"

$x_9$ AND $x_{10}$ EACH
CORRESPOND TO VALUES
OF CATEGORY-TYPE
VARIABLE "TIME SEGMENT"

$x_8$ CORRESPONDS TO
CONTINUOUS-TYPE VARIABLE
"TEMPERATURE"

$x_{11}$ CORRESPONDS TO
CONTINUOUS-TYPE
VARIABLE "HUMIDITY"

# FIG. 12

1000

1001
CPU

1005
DISPLAY DEVICE

1006
INPUT DEVICE

| AUXILIARY STORAGE DEVICE | MAIN STORAGE DEVICE | INTERFACE |
|---|---|---|
| 1003 | 1002 | 1004 |

# FIG. 13

DISPLAY PRIORITY ORDER DETERMINATION MEANS — 73

DISPLAY MEANS — 74

## INTERNATIONAL SEARCH REPORT

| International application No. |
| --- |
| PCT/JP2015/004284 |

A. CLASSIFICATION OF SUBJECT MATTER

*G06Q30/02(2012.01)i*

According to International Patent Classification (IPC) or to both national classification and IPC

B. FIELDS SEARCHED

Minimum documentation searched (classification system followed by classification symbols)

G06Q30/02

Documentation searched other than minimum documentation to the extent that such documents are included in the fields searched

Jitsuyo Shinan Koho 1922–1996 Jitsuyo Shinan Toroku Koho 1996–2015
Kokai Jitsuyo Shinan Koho 1971–2015 Toroku Jitsuyo Shinan Koho 1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2012-128800 A (Nippon Steel Engineering Co.,<br>Ltd.),<br>05 July 2012 (05.07.2012),<br>fig. 2<br>(Family: none) | 6,11,13<br>1-5,7-10,12 |
| Y<br>A | JP 2004-62521 A (Nippon Telegraph and<br>Telephone Corp.),<br>26 February 2004 (26.02.2004),<br>paragraph [0005]; fig. 1<br>(Family: none) | 6,11,13<br>1-5,7-10,12 |
| Y<br>A | JP 2005-149162 A (Sanc Salaam Corp.),<br>09 June 2005 (09.06.2005),<br>paragraph [0028]; fig. 4<br>(Family: none) | 6,11,13<br>1-5,7-10,12 |

☐ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 01 October 2015 (01.10.15) | 13 October 2015 (13.10.15) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014216839 A

**Non-patent literature cited in the description**

- SAS Visual Analytics. SAS Institute Japan Ltd, 23 October 2014

- Nikkei big data. Machine leaning one step ahead, penetrating into the field of use of data drastically increased due to IoT. Nikkei Business Publications, Inc, 2014, vol. 06, 7-12